# EUROPÄISCHE PATENTSCHRIFT

(11) **EP 4 129 537 B1**
(45) Veröffentlichungstag und Bekanntmachung des Hinweises auf die Patenterteilung: **25.06.2025**
(21) Anmeldenummer: 21189474.6
(22) Anmeldetag: 03.08.2021
(51) Int. Cl.: B22F 10/36, B22F 10/28, B22F 12/43, B33Y 10/00, B33Y 50/02

(54) **STEUERUNG FÜR GEPULSTE BESTRAHLUNG IN DER ADDITIVEN HERSTELLUNG**
CONTROL FOR PULSED IRRADIATION IN ADDITIVE MANUFACTURING
COMMANDE POUR LE RAYONNEMENT PULSÉ DANS LA FABRICATION ADDITIVE

(43) Veröffentlichungstag der Anmeldung: 08.02.2023
(73) Patentinhaber: Siemens Energy Global GmbH & Co. KG, 81739 München (DE)
(72) Erfinder: Heitmann, Timo, 10245 Berlin (DE)

(56) Entgegenhaltungen:
- EP-A1- 3 632 593

## Beschreibung

Die vorliegende Erfindung betrifft ein Verfahren zur Bereitstellung von Steuerungsanweisungen für die additive Herstellung einer Bauteilstruktur und ein entsprechendes Computerprogrammprodukt, sowie eine entsprechende Steuerungsvorrichtung für eine additive Herstellungsanlage.

Design und Materialeigenschaften von Hochleistungs-Maschinenkomponenten sind Gegenstand stetiger Entwicklung, um Funktionalität und/oder Einsatzgebiete der entsprechenden Bauteile im Einsatz zu steigern bzw. zu erweitern. Bei Wärmekraftmaschinen, insbesondere Gasturbinen, zielt die Entwicklung häufig auf immer höhere Einsatztemperaturen. Um beispielsweise den Herausforderungen sich wandelnder industrieller Anforderungen gerecht zu werden, erstrebt die Entwicklung insbesondere eine erhöhte thermomechanische Belastbarkeit und Lebensdauer sowie Festigkeitssteigerung solcher Bauteilstrukturen. Das vorliegende Bauteil bzw. die Bauteilstruktur kann demgemäß vorzugsweise für den Einsatz im Heißgaspfad einer Gasturbine vorgesehen sein. Beispielsweise betrifft das Bauteil eine zu kühlende Komponente mit einem dünnwandigen oder filigranen Design. Alternativ oder zusätzlich kann es sich bei dem Bauteil um eine Komponente für den Einsatz in der Automobilität oder im Luftfahrtsektor handeln.

Die generative oder additive Fertigung (AM: "additive manufacturing") wird aufgrund technischer Weiterentwicklung zunehmend interessant auch für die Serienherstellung der oben genannten Bauteile.

Additive Herstellungsverfahren, umgangssprachlich auch als 3D-Druck bezeichnet, umfassen beispielsweise als Pulverbettverfahren das selektive Laserschmelzen (SLM) oder Lasersintern (SLS), oder das Elektronenstrahlschmelzen (EBM). Weitere additive Verfahren sind beispielsweise "Directed Energy Deposition (DED)"-Verfahren, insbesondere Laserauftragschweißen, Elektronenstrahl-, oder Plasma-Pulverschweißen, Drahtschweißen, metallischer Pulverspritzguss, sogenannte "sheet lamination"-Verfahren, oder thermische Spritzverfahren (VPS LPPS, GDCS).

Ein Verfahren zum selektiven Laserschmelzen mit gepulster Bestrahlung ist beispielsweise bekannt aus EP 3 022 008 B1. Hier ist eine Pulsung der Bestrahlung allerdings auf Kurzpulse bzw. Ultrakurzpulse beschränkt, die sich lediglich für den Aufbau von Randbereichen einer Struktur anwenden lassen. Diese Konturbestrahlung soll auch nicht - wie durch die vorliegende Erfindung bezweckt - ein möglichst zusammenhängendes Strukturergebnis sowie Steuerungsanweisungen für Pulse im Bereich von Kilohertz liefern. Dies wäre durch die Kürze der Pulse der genannten Druckschrift auch gar nicht möglich.

Aus der EP 3 632 593 A1 ist weiterhin ein additives Herstellungsverfahren mittels einer gepulsten Bestrahlung für die Herstellung von metallischen Gläsern bekannt.

Additive Fertigungsverfahren haben sich weiterhin als besonders vorteilhaft für komplexe oder filigran gestaltete Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils weitgehend auf Basis einer entsprechenden CAD-Datei und der Wahl entsprechender Fertigungsparameter erfolgen kann. Prozess- oder Bestrahlungsparameter werden indes - ebenfalls üblicherweise der Herstellung vorgelagert - mittels computer- oder rechnergestützter Fertigung (vgl. "Computer-Aided-Manufacturing" (CAM)) gewählt und/oder fertigungstechnisch umgesetzt.

Insbesondere die Herstellung von Gasturbinenschaufeln mittels der beschriebenen pulverbett-basierten Verfahren (LPBF englisch für "Laser Powder Bed Fusion") ermöglicht vorteilhaft die Implementierung von neuen Geometrien, Konzepten bzw. Lösungen, welche die Herstellungskosten bzw. die Aufbau- und Durchlaufzeit reduzieren, den Herstellungsprozess optimieren und beispielsweise eine thermomechanische Auslegung oder Strapazierfähigkeit der Komponenten verbessern können. Auf konventionelle Art, beispielsweise gusstechnisch, hergestellte Komponenten stehen der additiven Fertigungsroute, beispielsweise hinsichtlich ihrer Formgebungsfreiheit und auch in Bezug auf die erforderliche Durchlaufzeit und den damit verbundenen hohen Kosten sowie dem fertigungstechnischen Aufwand, deutlich nach.

Durch den Pulverbettprozess entstehen in der Bauteilstruktur inhärent jedoch hohe thermische Spannungen. Insbesondere führen zu kurz bemessene Bestrahlungswege oder -vektoren zu starken Überhitzungen, die wiederum zum Verzug der Struktur führen. Ein starker Verzug während des Aufbauprozesses führt leicht zu strukturellen Ablösungen, thermischen Verformungen oder geometrischen Abweichungen außerhalb einer zulässigen Toleranz.

Es ist daher eine Aufgabe der vorliegenden Erfindung, Mittel zur verbesserten Prozesssteuerung additiver Herstellungsverfahren anzugeben. Nachdem additive Herstellungsverfahren bereits Einzug in industrielle Anwendungen gefunden haben und deren Reproduzierbarkeit sogar bei hochbelasteten Komponenten immer besser gelingt, besteht ein Bedarf, die Vielzahl relevanter Parameter aufeinander abzustimmen und zu tarieren. In der Kontrolle und der verbesserten Prozesssteuerung bzw. der Bereitstellung entsprechender Steuerungsanweisungen liegt der Schlüssel, die Materialeigenschaften der Bauteile - bei gleichzeitig durch den additiven Prozess inhärent hoher Formgebungsfreiheit - zu verbessern.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zur computergestützten, Bereitstellung von Steuerungsanweisungen, insbesondere umfassend Steuerungs- oder Bestrahlungsparameter, für eine gepulste (selektive) Bestrahlung in der additiven Herstellung der Bauteilstruktur.

Das Verfahren umfasst das Festlegen von Prozessparametern, umfassend eine Pulsfrequenz, eine Pulsweite oder Pulsdauer, eine Rastergeschwindigkeit und eine Bestrahlungsleistung. Die Rastergeschwindigkeit kann insbesondere eine Spur- oder Tastgeschwindigkeit für den selektiv anzusteuernden Energiestrahl bezeichnen. Bei den genannten Prozessparametern handelt es sich also vorzugsweise konkret um Bestrahlungsparameter, die für solche Prozesse in irgendeiner Art zwangsläufig bestimmt oder eingestellt werden müssen.

Das Verfahren umfasst weiterhin das Definieren von Pulsfrequenz und Rastergeschwindigkeit als Prozesskonstanten. Mit diesen "Konstanten" ist vorliegend gemeint, dass die Größen bzw. Werte der besagten Parameter zumindest schicht- oder pfadweise konstant bleiben und während der Bestrahlung bzw. Herstellung nicht variiert werden.

In einer Ausgestaltung werden Pulsfrequenz und Rastergeschwindigkeit nur schichtweise und/oder nur pfadweise als Prozesskonstanten definiert.

Das Verfahren umfasst weiterhin das Bestimmen bzw. Errechnen von Parameterwerten zumindest der Pulsweite und der Bestrahlungsleistung aus den definierten Prozesskonstanten.

Ein weiterer Aspekt der vorliegenden Erfindung betrifft ein Computerprogramm bzw. Computerprogrammprodukt, umfassend Befehle, die bei der Ausführung des Programms durch einen Computer, eine Datenverarbeitungseinrichtung oder eine entsprechende Steuerung zu Bestrahlung eines Energiestrahls in einer additiven Herstellungsanlage, diese Mittel veranlassen, das beschriebene Verfahren durchzuführen.

Das Computerprogramm(produkt) kann beispielsweise als (flüchtiges oder nicht-flüchtiges) Speicher- oder Wiedergabemedium, wie z.B. eine Speicherkarte, ein USB-Stick, eine CD-ROM oder DVD, oder auch in Form einer herunterladbaren Datei von einem Server und/oder in einem Netzwerk bereitgestellt werden oder vorliegen. Die Bereitstellung kann weiterhin zum Beispiel in einem drahtlosen Kommunikationsnetzwerk durch die Übertragung einer entsprechenden Datei mit dem Computerprogrammprodukt erfolgen. Ein Computerprogrammprodukt kann Programmcode, Maschinencode bzw. numerische Steuerungsanweisungen, wie G-code und/oder andere ausführbare Programmanweisungen im Allgemeinen beinhalten.

In einer Ausgestaltung betrifft das Computerprogrammprodukt Herstellungsanweisungen, gemäß denen eine additive Herstellungsanlage, beispielsweise über CAM-Mittel durch ein entsprechendes Computerprogramm, zur Herstellung des Bauteils gesteuert wird. Das Computerprogrammprodukt kann weiterhin Geometriedaten und/oder Konstruktionsdaten in einem Datensatz oder Datenformat, wie einem 3D-Format bzw. als CAD-Daten enthalten bzw. ein Programm oder Programmcode zum Bereitstellen dieser Daten umfassen.

Durch die erfindungsgemäßen Mittel wird es vorteilhafterweise erreicht, verbesserte physikalisch mechanische Eigenschaften des Bauteils bereits prozessvorbereitend festzulegen. Dadurch gelingt es gleichzeitig den Fertigungsausschuss zu reduzieren und die Prozesseffizienz bzw. den -durchsatz zu steigern. Durch die vorliegende Erfindung wird erreicht, die Materialgüte filigraner oder dünnwandige Bauteilstrukturen durch einen verbesserten gepulsten Bestrahlungsmodus zu verbessern.

Ein Wert der Pulsfrequenz wird zwischen 1 kHz und 25 kHz gewählt oder bestimmt. Durch die Wahl der Frequenz in etwa innerhalb dieses Wertebereichs lässt sich eine gepulste Bestrahlung zweckmäßig auch für kleine räumliche Auflösungen der aufzubauenden Strukturen von bis herab zu 100 µm und weniger realisieren. Auch wird die Frequenz gemäß dieser Ausgestaltung zweckmäßig auf den Parameter der Rastergeschwindigkeit abgestimmt bzw. durch die Wahl dieser Größen ein zweckmäßiger (zeitlicher und/oder räumlicher) Puls- oder Schmelzbadüberlapp erreicht.

In einer Ausgestaltung bezeichnet die Bestrahlungsleistung vorzugsweise eine Spitzen- oder Pulsleistung, oder eine durchschnittliche oder gemittelte Leistung pro Periode des jeweiligen gepulsten Energieeintrags.

Der Wert der Leistung wird zwischen 50 W und 300 W bestimmt. Durch diese Ausgestaltung kann ebenfalls ein zweckmäßiger Energieeintrag sowie eine Abstimmung der Leistung auf die übrigen Parameter erfolgen. Bekanntlich ist das Maß des lokal begrenzten Energieeintrags in ein Pulverbett schwer zu konfektionieren, und daher kritisch hinsichtlich der zu erreichenden Bauteilstruktur. Ein übermäßiger Energieeintrag als auch ein zu geringer Energieeintrag können zu einem unbefriedigenden Strukturergebnis führen. Bei zu hoher eingebrachter Energie können Materialverdampfung, Poren oder Lunker in der Struktur entstehen, wohingegen ein zu geringer Energieeintrag gleichartig ein unzureichendes Aufschmelzergebnis zur Folge haben kann.

Weiterhin wird der Parameter des Schmelzbadüberlapps zusätzlich als Prozesskonstante definiert. Der genannte Schmelzbadüberlapp wird dann weiterhin aus Parameterwerten der festgelegten Prozessparameter bestimmt.

Es wird ein pfadweiser Schmelzbadüberlapp aus Parameterwerten von Frequenz, Pulsweite und Rastergeschwindigkeit; und ein schichtweiser Schmelzbadüberlapp zumindest im Wesentlichen aus einem Wert der Bestrahlungsleistung bestimmt, oder daraus errechnet.

Für die gepulste Bestrahlung wird weiterhin ein Tastgrad (englisch: "duty cycle") zwischen 25 % und 75 %, insbesondere 50 %, gewählt. Ein Tastgrad entspricht vorzugsweise dem Verhältnis von Pulsweite oder Pulsdauer zur Periodendauer. Demgemäß entspricht ein Tastgrad von 50 % einem sogenannten symmetrischen Puls.

Es wird ein Wert der Rastergeschwindigkeit zwischen 100 mm/s und 3000 mm/s, nämlich aus den Werten 200 mm/s, 300 mm/s, 500 mm/s, 1000 mm/s, 1500 mm/s, 2000 mm/s, 2500 mm/s, gewählt. Solche Spur- oder Rastergeschwindigkeiten in der Strahlführung haben sich als zweckmäßiges Optimum herausgestellt, um einerseits einen angemessenen Energieeintrag in das Pulverbett und, andererseits, einen guten Prozessfortschritt zu erreichen.

In einer Ausgestaltung werden mit steigender definierter Pulsfrequenz eine niedrigere Bestrahlungsleistung sowie eine kleinere Pulsweite bestimmt. Dieser Zusammenhang ergibt sich insbesondere dadurch, dass für hohe eingestellte Pulsfrequenzen eine gewisse Antwortzeit des Energiestrahls oder Lasers bzw. einer entsprechenden Strahlquelle zu berücksichtigen ist.

Ein weiterer Aspekt der vorliegenden Erfindung betrifft ein Verfahren zur pulverbett-basierten additiven Herstellung einer Bauteilstruktur mittels der bereitgestellten Steuerungsanweisungen. Durch das beschriebene Herstellungsverfahren lassen sich die Vorteile der verbesserten Steuerung weiterhin in (verbesserten) Bauteileigenschaften der aufgebauten Struktur manifestieren.

Ein weiterer Aspekt der vorliegenden Erfindung betrifft eine Steuerungsvorrichtung für die additive Herstellung einer Bauteilstruktur, wobei die Steuerungsvorrichtung ausgebildet ist, die bereitgestellten Steuerungsanweisungen zum Ansteuern eines Energiestrahls, wie eines Laserstrahls oder einer entsprechenden Strahlquelle einer additiven Herstellungsanlage, im Wege der additiven Herstellung der Bauteilstruktur umzusetzen.

Ein weiterer Aspekt der vorliegenden Erfindung betrifft eine additive Herstellungsanlage, umfassend die beschriebene Steuerungsvorrichtung.

Ausgestaltungen, Merkmale und/oder Vorteile, die sich vorliegend auf das Verfahren zum Bereitstellen von Steuerungsanweisungen bzw. das Computerprogrammprodukt beziehen, können ferner das additive Herstellungsverfahren direkt oder die Steuerungsvorrichtung betreffen, und umgekehrt.

Der hier verwendete Ausdruck "und/oder" oder "bzw.", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Weitere Einzelheiten der Erfindung werden nachfolgend anhand der Figuren beschrieben.
Figur 1 deutet das Prinzip additiver Pulverbettverfahren anhand einer schematischen Schnittansicht einer entsprechenden Herstellungsanlage an.
Figur 2 zeigt ein schematisches Flussdiagramm, andeutend erfindungsgemäße Verfahrensschritte.
Figur 3 deutet anhand einer schematischen Aufsicht auf einen Bestrahlungspfad eine Soll-Situation mit Bezug zu bestimmten Prozessparametern an.
Figur 4 deutet anhand einer schematischen Aufsicht auf einen Bestrahlungspfad eine Ist-Situation mit Bezug zu bestimmten Prozessparametern an.
Figur 5 zeigt eine diagrammatische Übersicht des gemessenen Verlaufs der Bestrahlungsleistung, parametrisch aufgetragen über der Pulsfrequenz bzw. des Tastgrades.
Figur 6 zeigt eine diagrammatische Übersicht der Pulsweite, welche parametrisiert durch die Bestrahlungsleistung über der Pulsfrequenz bzw. des Tastgrades aufgetragen ist.

In den Ausführungsbeispielen und Figuren können gleiche oder gleichwirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

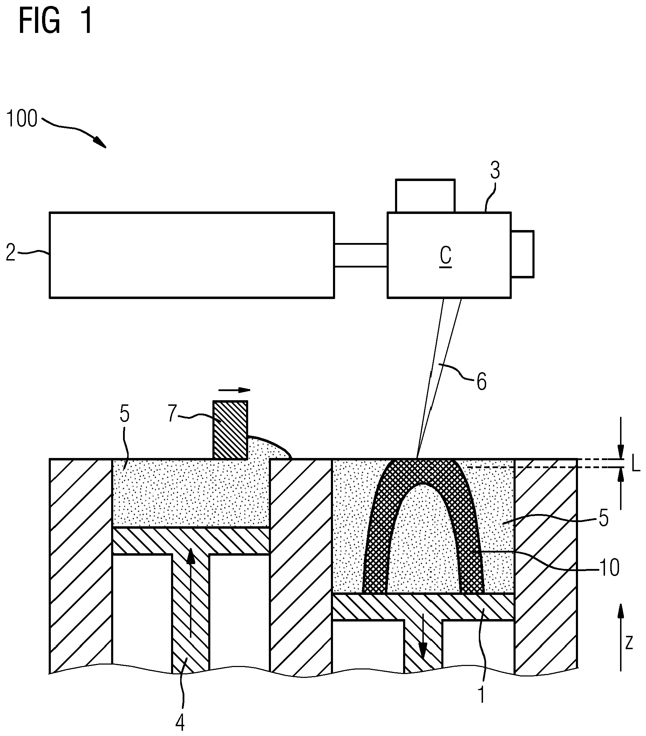

Figur 1 zeigt eine additive Herstellungsanlage 100. Die Herstellungsanlage 100 ist vorzugsweise als LPBF-Anlage und für den additiven Aufbau von Bauteilen oder Komponenten aus einem Pulverbett ausgestaltet. Die Anlage 100 kann im Speziellen auch eine Anlage zum Elektronenstrahlschmelzen betreffen.

Demgemäß weist die Anlage eine Bauplattform 1 auf. Auf der Bauplattform 1 wird ein additiv herzustellendes Bauteil 10 schichtweise aus einem Pulverbett hergestellt. Letzteres wird durch ein Pulvermaterial 5 gebildet, welches beispielsweise über einen Hubkolben 4 und dann einen Beschichter 7 schichtweise auf der Bauplattform 1 verteilt werden kann.

Nach dem Auftragen einer jeden Pulverschicht L werden gemäß der vorgegebenen Geometrie des Bauteils 10 selektiv Bereiche der Schicht mit einem Energiestrahl 6, beispielsweise einem Laser oder Elektronenstrahl, aufgeschmolzen und anschließend verfestigt. Auf diese Art wird das Bauteil 10 schichtweise entlang der gezeigten Aufbaurichtung z aufgebaut.

Der Energiestrahl 6 entstammt vorzugsweise einer Strahlquelle 2 und wird über eine Steuerung 3 ortsselektiv über jede Schicht L gerastert.

Die Steuerung oder Steuerungsvorrichtung 3 ist vorzugsweise ausgebildet, Steuerungsanweisungen zum Ansteuern des Energiestrahls 6 im Wege der additiven Herstellung der Bauteilstruktur 10 umzusetzen.

Nach jeder Schicht L wird die Bauplattform 1 vorzugsweise um ein der Schichtdicke entsprechendes Maß abgesenkt (vgl. nach unten gerichteter Pfeil rechts in Figur 1). Eine Dicke der Schicht(en) L beträgt üblicherweise lediglich zwischen 20 µm und 40 µm, so dass der gesamte Prozess leicht die selektive Bestrahlung von Tausenden bis hin zu Zehntausenden von Schichten umfassen kann. Dabei können durch den lediglich sehr lokal wirkenden Energieeintrag hohe Temperaturgradienten, von beispielsweise 10⁶ K/s oder mehr, auftreten. Dementsprechend groß ist daher während des Aufbaus und danach auch ein Verspannungszustand des Bauteils, was additive Herstellungsprozesse in der Regel erheblich verkompliziert.

Bei dem Bauteil 10 kann es sich um ein Bauteil einer Strömungsmaschine, beispielsweise um ein Bauteil für den Heißgaspfad einer Gasturbine, handeln. Insbesondere kann das Bauteil eine Lauf- oder Leitschaufel, ein Ringsegment, ein Brennkammer- oder Brennerteil, wie eine Brennerspitze, eine Zarge, eine Schirmung, ein Hitzeschild, eine Düse, eine Dichtung, einen Filter, eine Mündung oder Lanze, einen Resonator, einen Stempel oder einen Wirbler bezeichnen, oder einen entsprechenden Übergang, Einsatz, oder ein entsprechendes Nachrüstteil.

Die Geometrie des Bauteils wird üblicherweise durch eine CAD-Datei festgelegt. Nach dem Einlesen einer solchen Datei in die Herstellungsanlage 100 oder Steuerung 3 erfordert der Prozess anschließend zunächst die Festlegung einer geeigneten Bestrahlungsstrategie, beispielsweise durch Mittel des CAM, wodurch auch ein Aufteilen der Bauteilgeometrie in die einzelnen Schichten erfolgt. Dementsprechend können die im Folgenden beschriebenen erfindungsgemäßen Maßnahmen in der additiven Herstellung von Materialschichten auch bereits durch ein Computerprogrammprodukt C ausgedrückt werden. Das Computerprogramprodukt C umfasst dazu vorzugsweise Befehle, die bei der Ausführung eines entsprechenden Programms oder Verfahrens durch einen Computer, oder die Steuerung 3, diese(n) veranlassen, erfindungsgemäße Steuerungsanweisungen bzw. die selektive Bestrahlung dementsprechend durchzuführen.

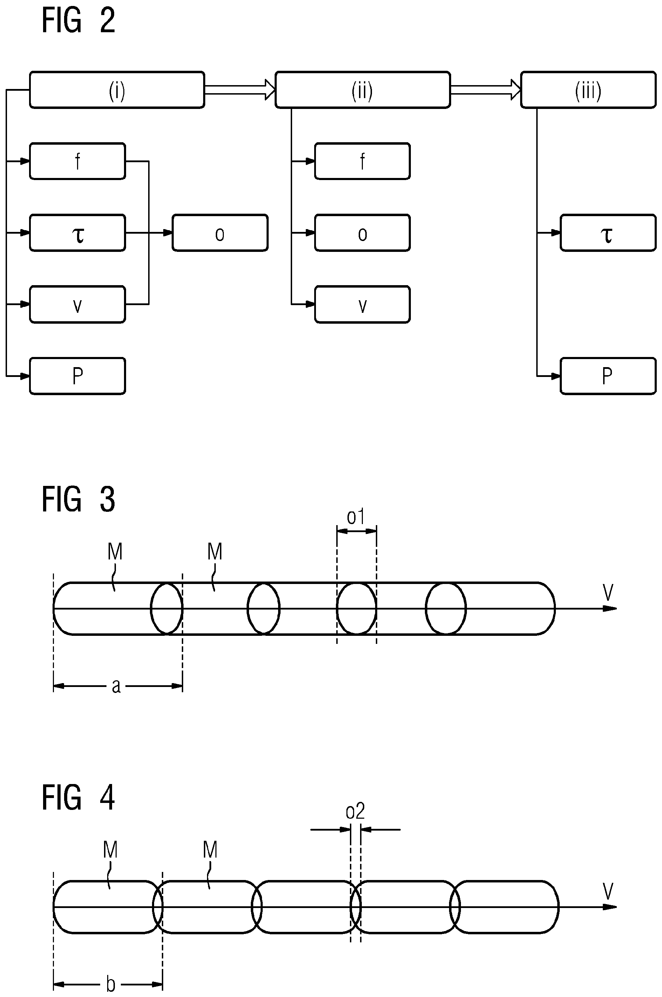

Anhand der Figur 2 werden erfindungsgemäße Verfahrensschritte illustriert. Das erfindungsgemäße Verfahren ist in erster Linie ein Verfahren zur computergestützten Bereitstellung von Steuerungsanweisungen für eine gepulste Bestrahlung in der additiven Herstellung der Bauteilstruktur 10.

Das Verfahren umfasst, (i), das Festlegen von Prozessparametern, umfassend eine Pulsfrequenz f, eine Impulsdauer oder Pulsweite τ, eine Rastergeschwindigkeit v und eine Bestrahlungsleistung P, wie im linken Teil der Figur 2 angedeutet. Anhand der Pulsweite τ, der Pulsfrequenz f und/oder der Rastergeschwindigkeit v kann insbesondere auch ein Schmelzbadüberlapp o bestimmt werden (siehe unten). Die Pfeile und Verbindungen im linken Teil der Darstellung der Figur 2 sollen andeuten, dass die beschriebenen Bestrahlungsparameter miteinander korreliert sind bzw. wechselwirken.

Das Verfahren umfasst weiterhin, (ii), das Definieren von Pulsfrequenz f und Rastergeschwindigkeit v als Prozesskonstanten, wie im mittleren Teil der Figur 2 angedeutet. Diese Parameter werden insbesondere für die Bestrahlung eines schichtweisen Bestrahlungsmusters bzw. für die Bestrahlung einzelner Vektoren oder Pfade (wie in den Figuren 3 und 4 weiter unten dargestellt) konstant gehalten.

Das Verfahren umfasst weiterhin, (vgl. (iii) rechts in Figur 2), das Bestimmen von Parameterwerten von zumindest der Pulsweite τ und der Bestrahlungsleistung P aus den definierten Prozesskonstanten.

Ein Parameterwert der Pulsfrequenz f wird aus einem Wertebereich zwischen 1 kHz und 25 kHz gewählt.

Weiterhin wird ein Parameterwert der Bestrahlungsleistung P, welcher pro Periode vorzugsweise eine Spitzenleistung oder auch eine Durchschnittsleistung angibt, zwischen 50 W und 300 W bestimmt.

Ein Schmelzbadüberlapp o (vgl. ebenfalls die Figuren 3 und 4 weiter unten) wird überdies als Prozesskonstante definiert und zusätzlich aus Parameterwerten der festgelegten Prozessparameter bestimmt. Der vorliegend genannte Schmelzbadüberlapp betrifft weiterhin einen pfadweisen Schmelzbadüberlapp, nämlich einen solchen wie anhand der Bezugszeichen o1 und o2 in den Figuren 3 bzw. 4 weiter unten gezeigt ist; sowie einen (vorliegend nicht explizit gekennzeichnet) schichtweisen Schmelzbadüberlapp. Der pfadweise Schmelzbadüberlapp o wird aus Parameterwerten von Frequenz, Pulsweite τ und Rastergeschwindigkeit v bestimmt; wohingegen der schichtweise Schmelzbadüberlapp im Wesentlichen durch die Bestrahlungsleistung P definiert wird. Unter gegebenen weiteren Parametern bestimmt die Bestrahlungsleistung bekanntlich auch die Ausdehnung eines Schmelzbades entlang der Aufbaurichtung z bzw. entlang der Schichtenfolge.

Parameterwerte des Tastgrades der gepulsten Bestrahlung werden aus einem Bereich zwischen 25 % und 75 %, beispielsweise 50 % oder mehr oder weniger, gewählt. Ein Wert der Rastergeschwindigkeit v wird indes aus einem Bereich zwischen 50 mm/s oder 100 mm/s und 3000 mm/s, aus den Werten 200 mm/s, 300 mm/s, 500 mm/s, 1000 mm/s, 1500 mm/s, 2000 mm/s, 2500 mm/s oder mehr oder weniger gewählt.

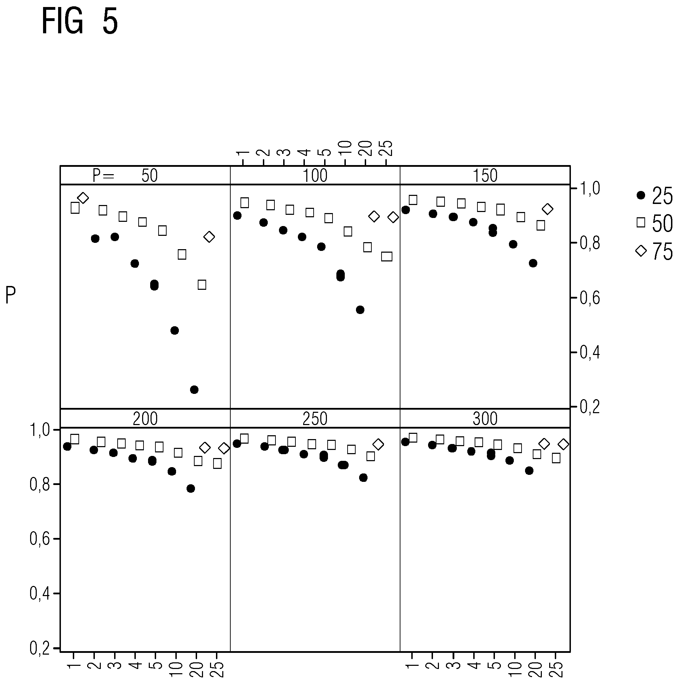

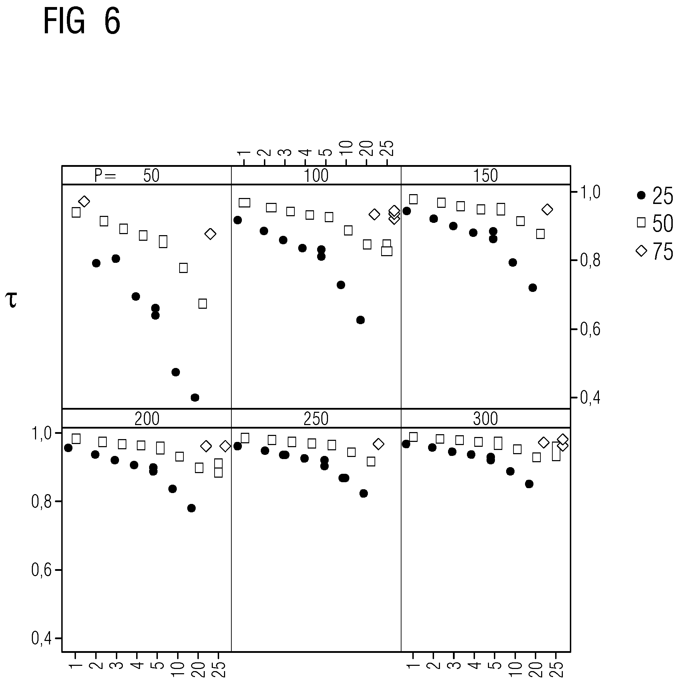

Häufig ist erkennbar, dass mit steigender definierter Pulsfrequenz f auch eine niedrigere Bestrahlungsleistung P sowie eine kleinere Pulsweite τ gewählt werden muss (siehe Figuren 5 und 6 weiter unten).

Der durch die erfindungsgemäßen Mittel bereitgestellte Algorithmus dimensioniert vorzugsweise - wie oben beschrieben - die relevanten Bestrahlungsparameter und stimmen diese aufeinander ab, um zu einem zweckmäßigen Strukturergebnis der Bauteilstruktur 10 zu gelangen, bzw. Steuerungsartefakten entgegenzuwirken.

Die Figur 3 zeigt eine schematische Aufsicht auf einen Bestrahlungspfad im gepulsten Bestrahlungsbetrieb für zumindest einen Teil einer jeden Bauteilschicht. Der Bestrahlungspfad bzw. Vektor ist mit dem Bezugszeichen V gekennzeichnet. Ellipsenförmig sollen einzelne Pulse bzw. Schmelzbäder M der Länge a des Vektors V angedeutet sein, wobei sich benachbarte Pulse in einem linsen- oder kreisförmigen Bereich o1 (räumlich) überlappen. Ein solcher Überlapp o1 mag vorliegend qualitativ ein zweckmäßiges Maß zur Herstellung einer zusammenhängenden Struktur für das Bauteil bezeichnen.

Die Figur 4 zeigt - ähnlich zur Figur 3 - eine schematische Aufsicht auf einen Bestrahlungspfad V. Im Unterschied zur Figur 3 sind hier jeweils Pulse bzw. entsprechende Schmelzbäder der Länge b, mit b < a, gezeigt. Auf diese Art verkürzte Schmelzbäder M lassen sich beispielsweise durch eine kleinere Pulsweite τ realisieren. Es ist weiterhin gezeigt, dass die Schmelzbäder M nur innerhalb eines sehr kleinen Überlapp-Bereichs o2 überlappen. Folglich ist der Überlapp o2 nicht mehr ausreichend, um eine homogene oder zusammenhängende Bauteilstruktur 10 hervorzubringen.

Obwohl dies vorliegend nicht explizit gekennzeichnet ist, erkennt eine Fachperson mit Bezug auf die Darstellung der Figur 1 klar, dass ein entsprechender Schmelzbadüberlapp nicht nur pfadweise, sondern auch schichtweise erforderlich ist, um eine durchgehende Bauteilstruktur 10 zu produzieren. Denn bei Verringerung der Bestrahlungsleistung würde sich beispielsweise ab einem bestimmten Punkt auch der Überlapp der Schmelzbäder entlang der Aufbaurichtung z kritisch verringern.

Statt einer zusammenhängenden Bauteilstruktur würde man bei zu geringem Überlapp allenfalls eine poröse und instabile Bauteilstruktur gewinnen.

In den Figuren 5 und 6 sind (weitere) Korrelationseffekte von Bestrahlungsparametern anhand von beispielhaften Messwerten gezeigt.

Die Figur 5 zeigt anhand von sechs Teildiagrammen jeweils Messwerte einer pulsweisen, normierten Bestrahlungsleistung (Feldvariable) im gegebenen Kontext. Von der Teildarstellung oben links nach unten rechts ist der Sollwert der Bestrahlungsleistung jeweils in 50-Watt-Schritten von 50 auf 300 W variiert gezeigt. Ein weiterer Parameter, für den jeweils Messwerte gezeigt sind, ist der Tastgrad (vgl. Legende oben rechts in Figur 5). Dieser stellt das dimensionslose Verhältnis der Pulsweite zur Periodendauer des jeweiligen Pulses dar. Hier sind jeweils Messwerte für einen Tastgrad von 25 %, 50 % und 75 % gezeigt. Ein weiterer Parameter auf der X-Achse ist die Frequenz, zu welcher insbesondere bei 1 kHz, bei 2 kHz, bei 3 kHz, bei 4 kHz, bei 5 kHz, bei 10 kHz, bei 20 kHz und bei 25 kHz jeweils die normierte Leistung bzw. ein entsprechender Rückgang der gemessenen Leistung zugeordnet ist.

Es ist zu erkennen, dass sich mit steigender Frequenz als auch insgesamt bei sehr geringen Soll-Leistungen, z. B. von 50 W und 100 W, ein kleiner Istwert bzw. ein größerer Abfall gegenüber dem Sollwert ergibt.

Die Figur 6 zeigt eine Situation ganz ähnlich zu der Figur 5, wobei lediglich jeweils auf der Y-Achse - statt der Leistung - die normierte Pulsweite τ aufgetragen ist. Aus der Figur 6 ist nun weiterhin ein zu dem Verhalten der Leistung ähnlicher Verlauf der Pulsweite zu erkennen. Mit steigender Frequenz und bei eher geringen Leistungen (vgl. obere Reihe der Teildarstellung) ergibt sich auch eine kleinere Pulsweite.

Erklären lassen sich diese Abweichungen bzw. Artefakte dadurch, dass ein Laser in konventionellen Herstellungsanlagen (ohne die erfindungsgemäße Steuerungslösung) häufig für einen hohen Leistungsbereich, nominell beispielsweise ca. 1000 W, ausgelegt ist und dieser im niedrigen Leistungsbereich daher nicht zuverlässig angesteuert werden kann.

Für hohe Frequenzen lässt sich die beschriebene Abweichung qualitativ dadurch erklären, dass mit steigender Frequenz zunehmend auch eine inhärente Antwortzeit bei der Ansteuerung des Lasers berücksichtigt werden muss.

Die beschriebenen Abweichungen können weiterhin durch die Mittel der vorliegenden Erfindung erfolgreich gelöst bzw. kompensiert werden.

## Patentansprüche

1. Verfahren zur computergestützten Bereitstellung von Steuerungsanweisungen (f, τ, v, P) für eine gepulste Bestrahlung in der additiven Herstellung einer filigranen oder dünnwandigen Bauteilstruktur (10) mit einer räumlichen Auflösung bis herab zu 100 µm, aufweisend:
- i) Festlegen von Prozessparametern, umfassend eine Pulsfrequenz (f), eine Pulsweite (τ), eine Rastergeschwindigkeit (v) und eine Bestrahlungsleistung (P),
- ii) Definieren von Pulsfrequenz (f), Rastergeschwindigkeit (v) und einem Schmelzbadüberlapp als Prozesskonstanten, wobei ein pfadweiser Schmelzbadüberlapp (∘) aus Parameterwerten von Pulsfrequenz, Pulsweite (τ) und Rastergeschwindigkeit (v), und ein schichtweiser Schmelzbadüberlapp aus einem Wert der Bestrahlungsleistung (P) bestimmt werden, und
- iii) Bestimmen von Parameterwerten der Pulsweite (τ), und der Bestrahlungsleistung (P) aus den definierten Prozesskonstanten, und wobei ein Wert der Pulsfrequenz (f) zwischen 1 kHz und 25 kHz und ein Wert der Bestrahlungsleistung (P) zwischen 50 W und 300 W gewählt bzw. bestimmt werden, und wobei für die gepulste Bestrahlung ein Tastgrad zwischen 25 % und 75 %, insbesondere 50 % und ein Wert der Rastergeschwindigkeit (v) aus den Werten 200 mm/s, 300 mm/s, 500 mm/s, 1000 mm/s, 1500 mm/s, 2000 mm/s, 2500 mm/s gewählt werden.

2. Verfahren gemäß Anspruch 1, wobei Pulsfrequenz (f) und Rastergeschwindigkeit (v) nur schichtweise als Prozesskonstanten definiert werden.

3. Computerprogrammprodukt (C), umfassend Befehle, die bei der Ausführung des Programms durch einen Computer, beispielsweise zur Steuerung der Bestrahlung in einer additiven Herstellungsanlage (100), diesen veranlassen, das Verfahren nach einem der vorhergehenden Ansprüche durchzuführen.

4. Verfahren zur pulverbett-basierten additiven Herstellung einer Bauteilstruktur (10) mittels der nach dem Verfahren der Ansprüche 1 bis 3 bereitgestellten Steuerungsanweisungen bzw. gemäß dem Computerprogrammprodukt (C) nach Anspruch 3.

5. Steuerungsvorrichtung (3) für die additive Herstellung einer Bauteilstruktur (10), wobei die Steuerungsvorrichtung ausgebildet ist, die gemäß dem Verfahren nach einem der Ansprüche 1 oder 2 bereitgestellten Steuerungsanweisungen zum Ansteuern eines Energiestrahls (6), insbesondere eines Laserstrahls, einer additiven Herstellungsanlage (100), im Wege der additiven Herstellung der Bauteilstruktur (10) umzusetzen.

6. Additive Herstellungsanlage (100), umfassend eine Steuerungsvorrichtung gemäß Anspruch 5.

## Claims

1. Method for the computer-aided provision of control instructions (f, τ, v, P) for pulsed irradiation in the additive manufacturing of an intricate or thin-walled component structure (10) with a spatial resolution down to 100 µm, comprising:
- i) establishing process parameters, comprising a pulse frequency (f), a pulse width (τ), a scan speed (v) and an irradiation power (P),
- ii) defining pulse frequency (f), scan speed (v) and a melt pool overlap as process constants, wherein a pathwise melt pool overlap (o) is determined from parameter values of pulse frequency, pulse width (τ) and scan speed (v), and a layerwise melt pool overlap is determined from a value of the irradiation power (P), and
- iii) determining parameter values of the pulse width (τ) and of the irradiation power (P) from the defined process constants, and wherein a value of the pulse frequency (f) between 1 kHz and 25 kHz and a value of the irradiation power (P) between 50 W and 300 W are selected and determined, respectively, and wherein for the pulsed irradiation a duty cycle of between 25% and 75%, in particular 50%, and a value of the scan speed (v) from the values 200 mm/s, 300 mm/s, 500 mm/s, 1000 mm/s, 1500 mm/s, 2000 mm/s, 2500 mm/s are selected.

2. Method according to Claim 1, wherein pulse frequency (f) and scan speed (v) are defined only layerwise as process constants.

3. Computer program product (C), comprising instructions which, when the program is executed by a computer, for example in order to control the irradiation in an additive manufacturing apparatus (100), cause said computer to carry out the method according to either of the preceding claims.

4. Method for the powder bed-based additive manufacturing of a component structure (10) by means of the control instructions provided according to the method in Claims 1 to 3 or in accordance with the computer program product (C) according to Claim 3.

5. Control device (3) for the additive manufacturing of a component structure (10), wherein the control device is configured to implement the control instructions provided in accordance with the method according to either of Claims 1 and 2 in order to control an energy beam (6), in particular a laser beam, of an additive manufacturing apparatus (100), in the course of the additive manufacturing of the component structure (10).

6. Additive manufacturing apparatus (100), comprising a control device according to Claim 5.

## Revendications

1. Procédé pour disposer avec assistance par ordinateur d'instructions (f, τ, v, P) de commande d'un rayonnement pulsé dans la fabrication additive d'une structure (10) de pièce en filigrane ou à paroi mince avec une résolution spatiale allant jusqu'en-dessous de 100 µm, comportant :
- i) fixation de paramètres opératoires, comprenant une fréquence (f) des impulsions, une largeur (τ) des impulsions, une vitesse (v) de balayage et une puissance (P) du rayonnement,
- ii) définition de la fréquence (f) des impulsions, de la vitesse (v) de balayage et d'un recouvrement de bain en fusion comme constantes opératoires, dans lequel on détermine un chevauchement (o) de bain en fusion chemin par chemin à partir de valeurs de paramètres de la fréquence des impulsions, de la largeur (τ) des impulsions et de la vitesse (v) de balayage, et on détermine un recouvrement de bain en fusion couche par couche à partir d'une valeur de la puissance (P) et du rayonnement, et
- iii) détermination de valeurs de paramètres de la largeur (τ) des impulsions, et de la puissance (P) du rayonnement à partir des constantes opératoires définies, et dans lequel on choisit ou on détermine une valeur de la fréquence (f) des impulsions comprise entre 1 kHz et 25 kHz et une valeur de la puissance (P) du rayonnement comprise entre 50 W et 300 W, et dans lequel on choisit pour le rayonnement pulsé un pourcentage de balayage compris entre 25 % et 75 %, notamment de 50 % et une valeur de la vitesse (v) de balayage dans les valeurs 200 mm/s, 300 mm/s, 500 mm/s, 1000 mm/s, 1500 mm/s, 2000 mm/s, 2500 mm/s.

2. Procédé suivant la revendication 1, dans lequel on ne définit la fréquence (f) des impulsions et la vitesse (v) de balayage que couche par couche comme constantes opératoires.

3. Produit (C) de programme d'ordinateur, comprenant des instructions, qui lors de l'exécution du programme par ordinateur, par exemple pour la commande du rayonnement dans une installation (100) de fabrication additive, font que celles-ci exécutent le procédé suivant l'une des revendications précédentes.

4. Procédé de fabrication additive reposant sur un lit de poudre d'une structure (10) de pièce au moyen d'instructions de commande mises à disposition par le procédé des revendications 1 à 3 ou conformément au produit (C) de programme d'ordinateur suivant la revendication 3.

5. Dispositif (3) de commande de la fabrication additive d'une structure (10) de pièce, dans lequel le dispositif de commande est constitué pour transformer les instructions de commande mises à disposition suivant le procédé selon l'une des revendications 1 ou 2 pour la commande d'un faisceau (6) d'énergie, en particulier d'un faisceau laser, d'une installation (100) de fabrication additive, au cours de la fabrication additive de la structure (10) de la pièce.

6. Installation (100) de fabrication additive, comprenant un dispositif de commande suivant la revendication 5.
